# EUROPÄISCHE PATENTSCHRIFT

(11) **EP 1 960 160 B1**
(45) Veröffentlichungstag und Bekanntmachung des Hinweises auf die Patenterteilung: **12.08.2009**
(21) Anmeldenummer: 06806212.4
(22) Anmeldetag: 12.10.2006
(51) Int. Cl.: B25J 15/02

(54) **SPANNVORRICHTUNG MIT ZWEI ANTRIEBSEINHEITEN**
CLAMPING DEVICE WITH TWO DRIVE UNITS
DISPOSITIF DE SERRAGE DOTE DE DEUX UNITES D'ENTRAINEMENT

(30) Priorität: 12.12.2005 DE 102005060511
(43) Veröffentlichungstag der Anmeldung: 27.08.2008
(73) Patentinhaber: FESTO AG & Co. KG, 73734 Esslingen (DE)
(72) Erfinder: WELK, Christian, 89257 Illertissen (DE); HARTRAMPH, Ralf, 73095 Albershausen (DE)
(74) Vertreter: Abel, Martin
(86) Internationale Anmeldenummer: PCT/EP2006/009853
(87) Internationale Veröffentlichungsnummer: WO 2007/068301

(56) Entgegenhaltungen:
- EP-A1- 1 245 346
- DE-A1- 10 336 715

## Beschreibung

Die Erfindung betrifft eine Spannvorrichtung, mit mindestens einer Spannbacke, die zu einer Arbeitsbewegung antreibbar ist, indem sie über ein Koppelgetriebe mit den jeweils zu einer Abtriebsbewegung antreibbaren Abtriebsteilen wenigstens zweier Antriebseinheiten bewegungsgekoppelt ist, wobei das Koppelgetriebe ein mit beiden Abtriebsteilen in Antriebsverbindung stehendes starres Koppelglied aufweist, das an einer Kraftäbgabestelle mit der Spannbacke antriebsmäßig verbunden ist und das durch Betätigung mindestens einer Antriebseinheit begüglich einer zu der Kraftabgabestelle beabstandeten Drehlegerstelle verschwenkbar ist.

Eine als Greifvorrichtung ausgebildete Spannvorrichtung dieser Art geht aus der EP 1 245 346 A1 hervor. Sie enthält zwei unter Ausführung einer Arbeitsbewegung relativ zueinander verlagerbare Spannbacken, die über ein Koppelgetriebe mit den Abtriebsteilen zweier Antriebseinheiten antriebsmäßig verbunden sind. Jede Spannbacke ist über ein starres Koppelglied mit einem der Abtriebsteile gekoppelt, wobei die Koppelelemente ihrerseits zur Synchronisation ihrer Bewegungen miteinander in Eingriff stehen. Die beiden Antriebseinheiten werden jeweils gleichzeitig betätigt, um eine schließende oder öffnende Arbeitsbewegung der Spannbacken hervorzurufen.

Eine aus der DE 203 05 092 U1 bekannte Spannvorrichtung ist als Kniehebel-Spannvorrichtung ausgebildet und enthält lediglich eine Spannbacke, die über ein Koppelgetriebe mit dem Abtriebsteil einer von einem elektrodynamischen Lineardirektantrieb gebildeten Antriebseinheit verbunden ist.

Aus der DE 103 36 715 A1 ist eine Greifereinrichtung bekannt, bei der zwei Antriebseinheiten für das Positionieren und Spannen einer Spannbacke verantwortlich sind, wobei eine dritte Antriebseinheit eine Anpassung an die Abmessungen des zu spannenden Gegenstandes vornehmen kann.

Bei einer aus der FR 1 252 747 bekannten Spannvorrichtung ist ein Koppelglied parallelogrammartig aufgehängt und durch Betätigung einer Antriebseinheit translatorisch bewegbar, um eine Spannbacke gegenüber einem zu spannenden Werkstück zu positionieren. Nach dieser Positionierung kann eine zweite Antriebseinheit betätigt werden, um das Koppelglied zu verschwenken und dadurch die Spannbacke mit dem Werkstück zu verspannen. Die Position der Spannbacke wird stets durch die Endlage der erstgenannten Antriebseinheit vorgegeben. Zur Anpassung an die Werkstückdicke ist eine zusätzliche Abstandsverstelleinrichtung vorhanden.

Die DE 103 41 627 A1 beschreibt eine Spannvorrichtung, bei der zwei Spannbacken bei Einnahme ihrer Spannposition reibschlüssig arretierbar sind.

Die DD 157 777 offenbar eine selbstklemmende Spannzange mit Mitteln zur hydraulischen Erzeugung von Spannenergie, wobei eine zusätzliche Anpresskraft durch einen mit einem Kniehebelsystem ausgestatteten Hydraulikzylinder hervorgerufen wird.

Gemäß DE 17 77 386 C3 wird eine Spannvorrichtung zum Einspannen eines Prägewerkzeuges verwendet. Zwei Hydraulikantriebe können abwechselnd auf einen dreieckförmigen Hebel einwirken, um das Prägewerkzeug entweder festzuklemmen oder zu lösen.

Die DE 1 502 860 A befasst sich mit einer Werkzeugmaschine, die eine Einspannvorrichtung für ein Werkstück aufweist, deren Spannbacke mittels einer Kniehebelvorrichtung betätigbar ist.

Aus der US 4 824 087 ist eine Spannvorrichtung bekannt, die über zwei Spannbacken verfügt. Die zweite Spannbacke ist horizontal relativ zu der ersten Spannbacke beweglich. Ein Betätigungssystem ist so mit der zweiten Spannbacke gekoppelt, dass die zweite Spannbacke entweder hin zu der ersten Spannbacke oder von dieser weg bewegt werden kann, wenn eine vertikale Betätigungskraft aufgebracht wird.

Im Allgemeinen kann durch die Auslegung des Koppelgetriebes einer Spannvorrichtung entweder ein großer Hub der Spannbacke bei gleichzeitig kleiner Spannkraft oder aber ein kleiner Hub bei gleichzeitig großer Spannkraft realisiert werden. Für zahlreiche Anwendungsfälle von Spannvorrichtungen wäre es jedoch vorteilhaft, sowohl einen großen Hub als auch eine große Spannkraft der Spannbacke zur Verfügung zu haben. Dies gilt insbesondere für Anwendungen, bei denen abwechselnd Gegenstände mit unterschiedlich großen Abmessungen gespannt oder ergriffen werden sollen.

Es ist die Aufgabe der vorliegenden Erfindung, eine Spannvorrichtung zu schaffen, mit der sich sowohl ein relativ großer Hub als auch eine relativ große Spannkraft einer oder mehrerer vorhandener Spannbacken realisieren lässt.

Zur Lösung dieser Aufgabe ist vorgesehen, dass beide Abtriebsteile in jeweils schwenkbeweglicher Weise derart an zueinander beabstandeten Krafteinleitungsstellen des starren Koppelgliedes angreifen, dass durch Betätigung beider Antriebseinheiten eine der Positionierung der mindestens einen Spannbacke dienende translatorische Verlagerung des Koppelgliedes einschließlich der Drehlagerstelle hervorrufbar ist, und dass eine gesteuert betätigbare Festsetzeinrichtung vorhanden ist, durch die das Koppelglied an der Drehlagerstelle unter Belassung seiner Verschwenkbarkeit variabel in unterschiedlichen Positionen ortsfest festsetzbar ist, um bei anschließender Betätigung mindestens einer beabstandet zu der Kraftabgabestelle und zu der Drehlagerstelle am Koppelglied angreifenden Antriebseinheit eine Beaufschlagung der mindestens einen Spannbacke mit Hebelübersetzung hervorzurufen.

Die gesteuert betätigbare Festsetzeinrichtung ist in der Lage, das Koppelglied an einer zu der Kraftabgabestelle beabstandeten Drehlagerstelle ortsfest und zugleich verschwenkbar festzusetzen, nachdem das Koppelglied zuvor während einer Positionierphase unter Mitnahme der zugeordneten Spannbacke und einschließlich seiner Drehlagerstelle durch Betätigung beider Antriebseinheiten in eine Spann-Ausgangsposition verlagert wurde, die in der Regel durch die Anlage an einem festzuspannenden Werkstück vorgegeben sind. Das Abtriebsteil mindestens einer Antriebseinheit greift an einer zu sowohl der Kraftabgabestelle als auch der Drehlagerstelle beabstandeten Krafteinleitungsstelle des Koppelgliedes an, sodass bei im Anschluss an die Positionierphase bei gleichzeitig festgesetzter Drehlagerstelle des Koppelgliedes im Rahmen einer Spannphase stattfindender Betätigung dieser Antriebseinheit eine Beaufschlagung der Spannbacke mit Hebelübersetzung stattfindet.

Auf diese Weise ergibt sich eine Spannvorrichtung, durch die sowohl ein relativ großer Hub als auch gleichzeitig eine relativ hohe Spannkraft der mindestens einen Spannbacke realisiert werden kann. Bei einer typischen Betriebsweise der Spannvorrichtung kann die mindestens eine Spannbacke zunächst durch gleichzeitige Betätigung der mehreren am zugeordneten Koppelglied angreifenden Antriebseinheiten im Rahmen einer Positionierphase mit bei Bedarf hoher Geschwindigkeit bis zu einer Position verlagert werden, in der sie an einem zu spannenden Gegenstand anliegt oder sich zumindest in unmittelbarer Nähe dieses Gegenstandes befindet. Das Koppelglied wird dabei translatorisch, insbesondere rein translatorisch, bewegt, bei zweckmäßigerweise synchroner Bewegung der am Koppelglied angreifenden Abtriebsteile. Die Drehlagerstelle macht die Bewegung mit. Während dieser Positionierphase ist in der Regel noch keine sehr hohe Betätigungskraft erforderlich. An die Positionierphase schließt sich eine Spannphase an, bei der das Koppelglied um einen in der Regel nur geringen Betrag verschwenkt wird, wobei durch die vorliegenden Hebelverhältnisse eine Kraftübersetzung erzielt wird, aus der eine hohe Spannkraft der bewegungsgekoppelten mindestens einen Spannbacke resultiert. Das Koppelglied wird dabei um die nun ortsfest fixierte Drehlagerstelle herum verschwenkt, die zum Ende der Positionierphase durch entsprechend gesteuerte Aktivierung der Festsetzeinrichtung derart ortsfest festgesetzt wurde, dass dem Koppelglied ein Schwenkfreiheitsgrad bezüglich der Drehlagerstelle verbleibt. Dabei ergibt sich eine besonders vorteilhafte Betriebsweise, indem die Drehlagerstelle durch die Festsetzeinrichtung variabel in unterschiedlichen der bei der Verlagerung durch die Antriebseinheiten eingenommenen Positionen festsetzbar ist. Dies ermöglicht insbesondere eine variable Anpassung der Ausgangsposition des Hochkraft-Spannvorganges an die Abmessungen und/oder an die Gestaltung des jeweils festzuspannenden Gegenstandes. Weitere vorteilhafte Ausgestaltungen der Erfindung gehen aus den Unteransprüchen hervor.

Die Spannvorrichtung kann mit nur einer bewegbaren Spannbacke ausgestattet sein, wobei sie sich beispielsweise einsetzen lässt, um Werkstücke oder sonstige Gegenstände vorübergehend mit einer Unterlage oder einem anderen Gegenstand zu verspannen, beispielsweise zu Zwecken einer sich anschließenden mechanischen Bearbeitung. Gleichfalls kann die Spannvorrichtung aber auch mehrere gleichzeitig zu Spannbewegungen antreibbare Spannbacken aufweisen, wobei es sich dann insbesondere um eine Greifvorrichtung handelt, mit der Gegenstände ergriffen und umpositioniert werden können.

Bei einer Ausführungsform mit mehreren bewegbaren Spannbacken können sämtliche Spannbacken mit ein und demselben Koppelglied in Antriebsverbindung stehen. Bei einer anderen Variante enthält die Spannvorrichtung mehrere Spanneinheiten mit je einem eigenen Koppelglied, das mit jeweils mindestens einer Spannbacke und mindestens zwei Antriebseinheiten antriebsmäßig gekoppelt ist.

Besonders kompakte Abmessungen verspricht eine Bauform, bei der die Antriebseinheiten als Linearantriebe ausgeführt und mit paralleler Ausrichtung nebeneinanderliegend angeordnet sind. Bei diesen Linearantrieben handelt es sich beispielsweise um durch Fluidkraft oder um elektrisch betriebene Antriebe. Als besonders vorteilhaft wird die Realisierung in Gestalt sogenannter elektrodynamischer Lineardirektantriebe angesehen, wie sie exemplarisch aus der DE 203 05 092 U1 hervorgehen.

Die zum Festsetzen der Drehlagerstelle des Koppelgliedes dienende Festsetzeinrichtung kann derart angeordnet und ausgebildet sein, dass sie mit dem Abtriebsteil einer der am Koppelglied angreifenden Antriebseinheiten zusammenwirkt. In diesem Fall fällt die Drehlagerstelle mit der Krafteinleitungsstelle dieses Abtriebsteils zusammen. Während der Spannphase ist das festgesetzte Abtriebsteil durch die Festsetzeinrichtung blockiert und an einer Bewegung gehindert, so dass nur noch die andere Antriebseinheit aktiv ist und ein Verschwenken des Koppelgliedes hervorruft, was die geschilderte Hebelübersetzung zur Folge hat.

Besonders zweckmäßig ist es in diesem Zusammenhang, wenn das festzusetzende Abtriebsteil eine am Koppelglied angreifende Abtriebsstange aufweist, mit der die Festsetzeinrichtung zusammenwirkt.

Bei einer anderen Ausführungsform kooperiert die Festsetzeinrichtung nicht mit den Antriebseinheiten, sondern mit einem Mitnehmerelement, das an der Drehlagerstelle mit dem Koppelglied drehbar und im Übrigen fest verbunden ist. Während der Positionierphase macht das Mitnehmerelement die Bewegung des durch die Antriebseiriheiten angetriebenen Koppelgliedes mit. Während der sich anschließenden Spannphase ist das Mitnehmerelement durch die aktivierte Festsetzeinrichturig an einer Weiterbewegung gehindert, so dass gleichzeitig auch die Drehlagerstelle des Koppelgliedes ortsfest festgesetzt ist und bei der sich anschließenden Schwenkbewegung die geschilderte Kraftübersetzung auftritt.

Es sind konstruktive Lösungen möglich, bei der die Abtriebsbewegung der an ein und demselben Koppelglied angreifenden Abtriebsteile während der Positionierphase und der sich anschließenden Spannphase gleichgerichtet ist. Bei einer anderen Realisierungsform bewegen sich die Abtriebsteile in der Positionierphase und in der Spannphase in einander entgegengesetzten Richtungen.

Die Festsetzeinrichtung ist insbesondere als Klemmeinrichtung ausgeführt, die kraftschlüssig mit der festzusetzenden Komponente zusammenarbeitet. Dabei sind Ausgestaltungen mit ausschließlich kraftschlüssiger Festsetzung möglich, aber auch solche mit kombiniert kraftschlüssiger und formschlüssiger Festsetzung. Letzteres lässt sich beispielsweise durch ineinander eingreifende Verzahnungen realisieren.

Nachfolgend wird die Erfindung anhand der beiliegenden Zeichnung näher erläutert. In dieser zeigen:
- Figuren 1 bis 3: in schematischer Darstellung eine bevor- zugte erste Ausführungsform der erfindungsgemäßen Spannvorrichtung in unterschiedlichen Betriebspha- sen, und
- Figuren 4 bis 6: eine weitere vorteilhafte Ausführungsform der erfindungsgemäßen Spannvorrichtung, wiederum in schematischer Darstellung und bei Einnahme unter- schiedlicher Betriebszustände.

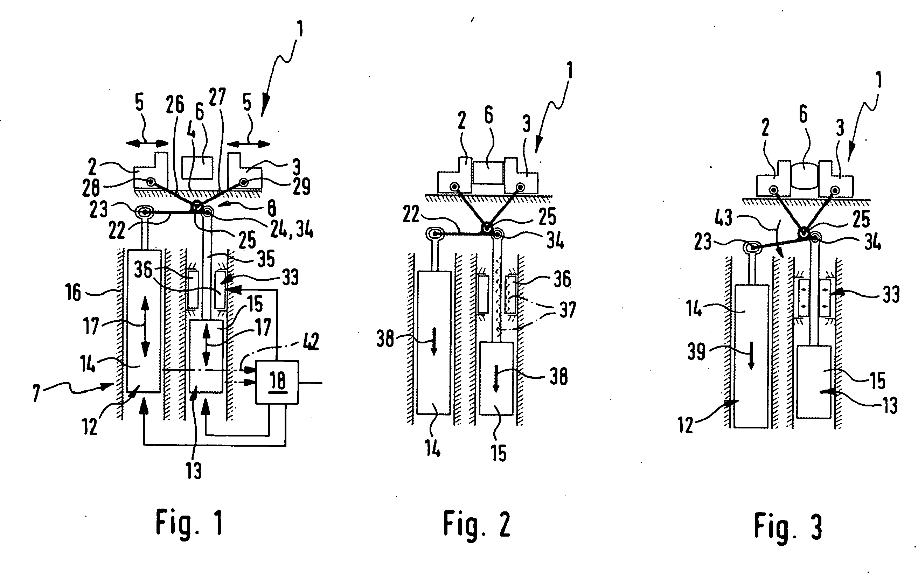

Die aus Figuren 1 bis 3 ersichtliche Spannvorrichtung 1 ist als Greifvorrichtung ausgebildet und enthält zwei Spannbacken 2, 3, die aufgrund einer ihnen zugeordneten Führungseinrichtung 4 jeweils in der Lage sind, eine durch einen Doppelpfeil verdeutlichte Arbeitsbewegung 5 auszuführen. Beim Ausführungsbeispiel sind die Arbeitsbewegungen 5 Linearbewegungen, im Rahmen derer die Spannbacken 2, 3 jeweils gleichzeitig entweder aufeinander zu oder voneinander weg bewegbar sind. Die aufeinander zu gerichteten Arbeitsbewegungen 5 seien im Folgenden als Spannbewegungen, die voneinander weggerichteten Arbeitsbewegungen 5 als Lösebewegungen bezeichnet.

Bei den Arbeitsbewegungen handelt es sich nicht notwendigerweise um Linearbewegungen. Bei entsprechender Ausgestaltung der Führungseinrichtung 4 kann es sich auch um andere Bewegungen handeln, insbesondere um eine Schwenkbewegung.

In der Zeichnung ist mit Bezugsziffer 6 ein durch die Spannbacken 2, 3 der Spannvorrichtung 1 zu ergreifender Gegenstand angedeutet. Bei ihm kann es sich beispielsweise um ein vorübergehend festzuhaltendes und insbesondere umzupositionierendes Werkstück handeln. Bei der Handhabung werden die Spannvorrichtung 1 und der Gegenstand 6 derart relativ zueinander positioniert, dass der Gegenstand 6 zwischen den beiden Spannbacken 2, 3 zu liegen kommt. Dies geschieht bei Einnahme einer weitestmöglich voneinander entfernten Grundstellung der beiden Spannbacken 2, 3, in der der Abstand zwischen den Spannbacken 2, 3 größer ist als die in der gleichen Richtung gemessenen Abmessungen des Gegenstandes 6. Die Figur 3 zeigt die Spannstellung der Spannbacken 2, 3, in der diese aneinander angenähert sind und den dazwischen befindlichen Gegenstand 6 kraftschlüssig festhalten.

Die Arbeitsbewegung 5 der Spannbacken 2, 3 wird durch eine Antriebsvorrichtung 7 der Spannvorrichtung 1 hervorgerufen. Jede Spannbacke 2, 3 kooperiert über ein zwischengeschaltetes Koppelgetriebe 8 gleichzeitig mit zwei Antriebseinheiten 12, 13 der Antriebsvorrichtung 7. Dabei wirken die gleichen zwei Antriebseinheiten 12, 13 gleichzeitig mit beiden Spannbacken 2, 3 zusammen. Im Folgenden seien die beiden Antriebseinheiten als erste und zweite Antriebseinheit 12, 13 bezeichnet.

Die erste Antriebseinheit 12 verfügt über ein erstes Abtriebsteil 14, die zweite Antriebseinheit 13 über ein zweites Abtriebsteil 15. Beide Abtriebsteile 14, 15 sind bevorzugt in einem gemeinsamen Gehäuse 16 derart verstellbar gelagert, dass sie relativ zu dem Gehäuse 16 eine hin und her gehende, durch einen Doppelpfeil angedeutete Abtriebsbewegung 17 ausführen können. Abweichend vom Ausführungsbeispiel können die Antriebseinheiten 12, 13 auch jeweils über ein gesondertes Gehäuse zur Aufnahme des zugehörigen Abtriebsteils 14, 15 verfügen.

Bevorzugt handelt es sich bei den Antriebseinheiten 12, 13 um Linearantriebe, wie dies beim Ausführungsbeispiel der Fall ist. Die Abtriebsbewegungen 17 sind dabei Linearbewegungen. Bevorzugt sind die Antriebseinheiten 12, 13 längsseits nebeneinander angeordnet, so dass die Abtriebsbewegungen 17 parallel zueinander verlaufen. Entsprechend sind auch die Antriebseinheiten 12, 13 insbesondere parallel zueinander ausgerichtet. Abweichend vom Ausführungsbeispiel könnte mindestens eine der Antriebseinheiten 12, 13 auch als Drehantrieb ausgeführt sein, bei dem die zugeordnete Abtriebsbewegung eine Dreh- oder Schwenkbewegung ist.

Bevorzugt handelt es sich bei den Linearantrieben 12, 13 des Ausführungsbeispiels um elektrische Linearantriebe und hierbei insbesondere um sogenannte elektrodynamische Lineardirektantriebe. In nicht näher gezeigter Weise ist dabei das Abtriebsteil 14, 15 mit einer Permanentmagneteinrichtung und das Gehäuse 16 mit einer elektrischen Spuleneinrichtung ausgestattet, oder umgekehrt. Um eine Abtriebsbewegung 17 hervorzurufen, wird die Spuleneinrichtung mit einem elektrischen Strom beaufschlagt, woraus eine elektrodynamische Kraftwirkung resultiert, welche eine in die eine oder andere Richtung orientierte Stellkraft auf das zugeordnete Abtriebsteil 14, 15 ausübt.

Eine elektronische Steuereinrichtung 18 übernimmt die elektrische Ansteuerung der Antriebseinheiten 12, 13, um die Abtriebsteile 14, 15 in der gewünschten Weise zu ihrer Abtriebsbewegung 17 anzutreiben.

Alternativ zu einer elektrisch aktivierbaren Bauform können mindestens eine und zweckmäßigerweise sämtliche Antriebseinheiten 12, 13 auch in durch Fluidkraft betätigbarer Bauart ausgeführt sein, beispielsweise in Gestalt von Arbeitszylindern, deren Abtriebsteil einen durch fluidisches Druckmedium, insbesondere Druckluft, beaufschlagbaren Kolben umfasst.

Das Koppelgetriebe 8 enthält ein starres Koppelglied 22, an dem an zueinander beabstandeten ersten und zweiten Krafteinleitungsstellen 23, 24 je eines der beiden Abtriebsteile 14, 15 in einer eine Kraftübertragung ermöglichenden Weise angreift. An den Krafteinleitungsstellen 23, 24 ist das Koppelglied 22 mit den beiden Abtriebsteilen 14, 15 bewegungsgekoppelt.

Bevorzugt liegt an den Krafteinleitungsstellen 23, 24 eine gelenkige Verbindung zwischen dem Koppelglied 22 und einem jeweiligen Abtriebsteil 14, 15 vor. Das Koppelglied 22 ist folglich an seinen Krafteinleitungsstellen 23, 24 jeweils verschwenkbar bezüglich dem zugeordneten Abtriebsteil 14, 15 gelagert, wobei die Schwenkachsen parallel zueinander und rechtwinklig zur zugeordneten Arbeitsbewegung 17 verlaufen. Beim Ausführungsbeispiel sind sie senkrecht zur Zeichenebene ausgerichtet. Die Gelenkverbindungen können als Festkörpergelenke ausgeführt sein.

Durch entsprechende Ansteuerung mittels der elektronischen Steuereinrichtung 18 können die Abtriebsteile 14, 15 zu synchronen Abtriebsbewegungen 17 veranlasst werden. Sie bewegen sich dann gleichzeitig mit gleicher Geschwindigkeit. Als Resultat wird das an ihnen fixierte Koppelglied 22 rein translatorisch verlagert, also ohne seine Ausrichtung im Raum zu verändern. Eine solche Art der Bewegung hat beim Übergang zwischen den aus Figuren 1 und 2 ersichtlichen Betriebszuständen stattgefunden.

Das Koppelglied 22 verfügt zusätzlich über eine zu den beiden Krafteinleitungsstellen 23, 24 quer zur Richtung der Abtriebsbewegungen 17 beabstandete Kraftabgabestelle 25. Sie sitzt beim Ausführungsbeispiel zwischen den beiden Krafteinleitungsstellen 23, 24, wobei ihr Abstand zu der dem zweiten Abtriebsteil 15 zugeordneten zweiten Krafteinleitungsstelle 24 geringer ist als der Abstand zu der dem ersten Abtriebsteil 14 zugeordneten ersten Krafteinleitungsstelle 23.

An der Kraftabgabestelle 25 ist das Koppelglied 22 mit den beiden Spannbacken 2, 3 antriebsmäßig verbunden. Dies geschieht beim Ausführungsbeispiel durch je mindestens einen Kraftübertragungsarm 26, 27, der zum einen an der Kraftabgabestelle 25 und zum anderen an der zugeordneten Spannbacke 2, 3 in einer Weise gelenkig gelagert ist, dass Zug- und Druckkräfte übertragen werden. Die Verbindungslinien zwischen der Kraftabgabestelle 25 und den Lagerstellen 28, 29 an der zugeordneten Spannbacke 2, 3 verlaufen geneigt zur Richtung der Abtriebsbewegungen 17. Die Gelenkachsen sind parallel zu den Schwenkachsen der beiden Krafteinleitungsstellen 23, 24 ausgerichtet.

Bei der translatorischen Verlagerung des Koppelgliedes 22 verlagert sich auch die Kraftabgabestelle 25 in der gleichen Richtung, wobei je nach Bewegungsrichtung Zug- oder Druckkräfte in die Kraftübertragungsarme 26, 27 eingeleitet werden, die zur Folge haben, dass die an der Führungseinrichtung 4 verstellbar geführten Spannbacken 2, 3 ihre Spannbewegung oder Lösebewegung ausführen.

Die Spannvorrichtung 1 enthält des Weiteren eine unter Vermittlung der elektronischen Steuereinrichtung 18 gesteuert betätigbare Festsetzeinrichtung 33, durch die das Koppelglied 22 an einer Drehlagerstelle 34 ortsfest in einer Weise festsetzbar ist, dass ein Schwenkfreiheitsgrad bezüglich einer mit den Schwenkachsen der Krafteinleitungsstellen 23, 24 gleichgerichteten Drehachse verbleibt.

Beim Ausführungsbeispiel der Figuren 1 bis 3 fällt die vorgenannte Drehlagerstelle 34 mit der zweiten Krafteinleitungsstelle 24 zusammen und die Festsetzeinrichtung 33 kooperiert mit dem an der zweiten Krafteinleitungsstelle 24 angreifenden zweiten Abtriebsteil 15. Zweckmäßigerweise enthält das zweite Abtriebsteil 15 eine Abtriebsstange 35 für das Zusammenwirken mit der Festsetzeinrichtung 33.

Bei der Festsetzeinrichtung 33 handelt es sich bevorzugt um eine Klemmeinrichtung. Exemplarisch sind zwei Klemmbacken 36 gezeigt, die quer zur Richtung der Abtriebsbewegung 17 verstellbar sind und sich dadurch wahlweise in einer das zweite Abtriebsteil 15 nicht beaufschlagenden Freigabestellung und einer unter Vorspannung am Außenumfang des zweiten Abtriebsteils 15 anliegenden Klemmstellung positionierbar sind. In der Klemmstellung ist das zweite Abtriebsteil 15 somit bevorzugt kraftschlüssig relativ zum Gehäuse 16 ortsfest festgelegt.

Eine andere Anzahl von Klemmbacken 36 wäre ebenfalls möglich. Im Übrigen könnte die Festsetzeinrichtung 33 auch auf einem anderen Funktionsprinzip basieren und beispielsweise mit einer Spannzange ausgestattet sein.

Vorzugsweise wird die Festsetzeinrichtung 33 elektrisch betätigt. Dies gilt insbesondere für Ausführungsformen mit elektrischen Antriebseinheiten 12, 13. Andere Betätigungsarten wären jedoch ebenfalls möglich, beispielsweise durch Fluidkraft. Letzteres empfiehlt sich insbesondere dann, wenn die Antriebseinheiten 12, 13 als fluidbetätigte Antriebe ausgestaltet sind.

Durch die Festsetzeinrichtung 33 kann das zweite Abtriebsteil 15 variabel in unterschiedlichen Positionen seiner Abtriebsbewegung 17 festgesetzt werden. Es ist ein gewisser Verstellbereich des zweiten Abtriebsteils 15 vorhanden, innerhalb dessen ein axial unbewegbares Festsetzen des zweiten Abtriebsteils 15 möglich ist. Hierbei kann es sich um einen Teil oder um den gesamten Verstellbereich des zweiten Abtriebsteils 15 handeln.

Um ein besonders sicheres Blockieren des zweiten Abtriebsteils 15 zu gewährleisten, kann die Festsetzeinrichtung 33 abweichend vom rein formschlüssig arbeitenden Ausführungsbeispiel auch so ausgebildet sein, dass eine zusätzliche formschlüssige Festsetzung möglich ist. Hierzu können, wie dies in Figur 2 strichpunktiert bei 37 angedeutet ist, einerseits an mindestens einer Klemmbacke 36 und andererseits am zweiten Abtriebsteil 15 eine Verzahnung vorgesehen sein. Die Verzahnung 37 des zweiten Abtriebsteils 15 ist insbesondere zahnstangenartig ausgeführt. Somit ergibt sich in der Klemmstellung ein Verzahnungseingriff, der in Richtung der Abtriebsbewegung 17 eine formschlüssige Abstützung zur Folge hat. Auf diese Weise lässt sich die Festsetzeinrichtung 33 technologisch sehr einfach gestalten.

Im Folgenden sei ein typischer Ablauf eines Betriebszyklus der in Figuren 1 bis 3 gezeigten Spannvorrichtung erläutert.

Beginnend bei der aus Figur 1 ersichtlichen Grundstellung der Spannbacken werden die Spannbacken zunächst im Rahmen einer Positionierphase soweit verlagert, bis sie gemäß Figur 2 an dem zwischen ihnen befindlichen; festzuspannenden Gegenstand 6 zur Anlage gelangen. Dies geschieht bei in Freigabestellung befindlicher Festsetzeinrichtung 33 durch synchrone Verlagerung der beiden Abtriebsteile 14, 15 gemäß Pfeilen 38, die dabei das Koppelglied 22 translatorisch mitnehmen, welches über die Kraftabgabestelle 25 die erforderlichen Stellkräfte auf die Spannbacken 2, 3 überträgt. Das Koppelglied 22 verlagert sich dabei von der in Figur 1 gezeigten Ausgangsposition in die aus Figur 2 ersichtliche Zwischenposition, wobei,letztere als Spann-Ausgangsposition bezeichnet wird, weil sie die Ausgangsposition für einen nachfolgenden Spannvorgang bildet.

Das Erreichen der Zwischenposition bzw. Spann-Ausgangsposition kann durch nicht näher gezeigte Sensormittel detektiert werden. Die Sensormittel sprechen beispielsweise auf eine erhöhte elektrische Leistungsaufnahme der elektrischen Antriebseinheiten 12, 13 an, die auftritt, wenn die Spannbacken 2, 3 auf einen Widerstand in Gestalt des Gegenstandes 6 treffen. Auch eine wegabhängige Detektion wäre möglich oder der Einsatz von Drucksensoren in Verbindung mit fluidbetätigten Antriebseinheiten 12, 13. Unabhängig von der Art der Ausgestaltung der Sensormittel ist in Figur 1 die Übertragung von Sensorsignalen zur elektronischen Steuereinrichtung 18 strichpunktiert bei 42 angedeutet.

Bei Erreichen der Spann-Ausgangsposition seitens des Koppelgliedes 22 aktiviert die Steuereinrichtung 18 die Festsetzeinrichtung 33, die daraufhin in die Klemmstellung umschaltet und das zweite Abtriebsteil 15 in Richtung der Abtriebsbewegung 17 unbewegbar festlegt. Gleichzeitig veranlasst die Steuereinrichtung 18 zweckmäßigerweise ein Abschalten der zweiten Antriebseinheit 13, um einen unnötigen Energieverbrauch oder eine Überlastung zu verhindern.

Durch die Aktivierung der Festsetzeinrichtung 33 ist die Drehlagerstelle 34 ortsfest fixiert. Dieser Zustand, wie auch die in Klemmstellung befindliche Festsetzeinrichtung 33, gehen aus Figur 3 hervor. Der zu spannende Gegenstand selbst ist an der Festsetzwirkung der Festsetzeinrichtung 33 nicht beteiligt, er wird insbesondere nicht als Widerlager für die Festsetzeinrichtung 33 benötigt. Das Festsetzen erfolgt also unabhängig vom zu spannenden Gegenstand.

Ungeachtet der Aktivierung der Festsetzeinrichtung 33 bleibt die erste Antriebseinheit 12 weiterhin aktiv, so dass sich deren erstes Abtriebsteil 14 gemäß Pfeil 39 mit gleichbleibender Richtung seiner Abtriebsbewegung 17 weiterbewegt. Alternativ wird diese Arbeitsbewegung wieder aufgenommen, wenn durch entsprechende Ansteuerung seitens der Steuereinrichtung 18 die erste Antriebseinheit 12 zum Ende der Positionierphase gemäß Figur 2 gestoppt worden sein sollte.

Die weitere Abtriebsbewegung 17 des ersten Abtriebsteils 14 bei festgesetzter Drehlagerstelle 34 ist kennzeichnend für eine sich an die Positionierphase anschließende, aus Figur 3 ersichtliche Spannphase. Hierbei wird das Koppelglied 22 durch die über das erste Abtriebsteil 14 eingeleitete Stellkraft gemäß Pfeil 43 um die ortsfeste Drehlagerstelle 34 verschwenkt. Da der Abstand zwischen der ersten Krafteinleitungsstelle 23 und der Drehlagerstelle 34 größer ist als der Abstand zwischen der Drehlagerstelle 34 und der Kraftabgabestelle 25, resultiert aus der entsprechenden Hebelübersetzung eine verstärkte Stellkraft an der Kraftabgabestelle 25, durch die die Spannbacken 2, 3 mit stark erhöhter Spannkraft in die endgültige Spannstellung verlagert werden.

Um bei diesem Spannvorgang ein Verklemmen zwischen dem Koppelglied 22 und dem ersten Abtriebsteil 14 zu vermeiden, ist das Koppelglied 22 an der ersten Krafteinleitungsstelle 23 mit einem Freiheitsgrad an der ersten Antriebseinheit 12 befestigt, der relative Bewegungen zwischen den beiden Komponenten quer zur Richtung der Abtriebsbewegung 17 gestattet.

Um den Gegenstand 6 wieder freizugeben, werden die geschilderten Bewegungsabläufe in umgekehrter Reihenfolge abgewickelt. Bei Bedarf kann allerdings die Festsetzeinrichtung 33 auch sofort gelöst werden.

Durch die von der aktuellen Abtriebsposition des zweiten Abtriebsteils 15 unabhängige Festsetzbarkeit dieses zweiten Abtriebsteil 15, ist die Spann-Ausgangsposition variabel und nicht auf eine bestimmte Position des Koppelgliedes 22 festgelegt. Dies gestattet einen problemlosen Einsatz der Spannvorrichtung 1 zum Spannen von Gegenständen 6 unterschiedlicher Abmessungen. Die Spannvorrichtung ist somit äußerst variabel einsetzbar. Das Ende der Positionierphase und mithin der Beginn der Spannphase kann somit an jeder beliebigen Stelle eines großen und insbesondere des gesamten Hubbereiches des zweiten Abtriebsteils 15 liegen.

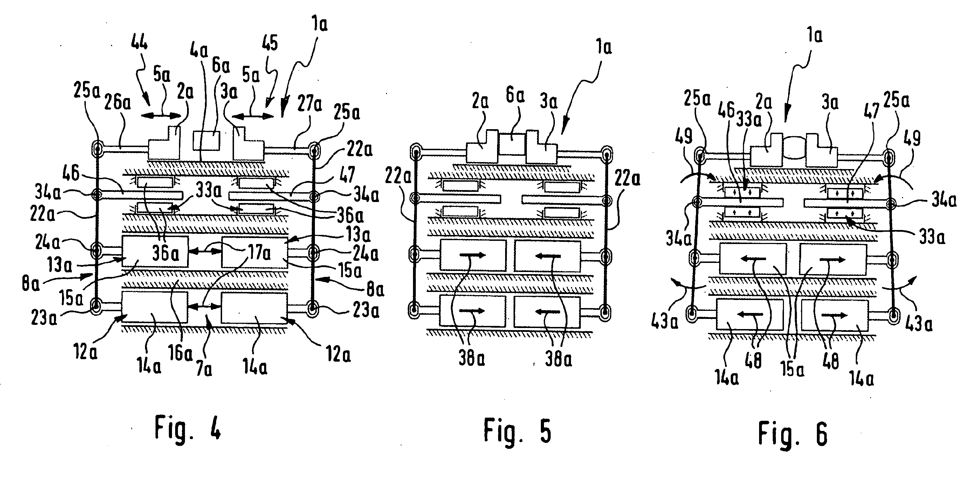

Die in Figuren 4 bis 6 gezeigte Spannvorrichtung 1a entspricht in weiten Teilen der anhand der Figuren 1 bis 3 erläuterten Spannvorrichtung 1. Einander entsprechende Bauteile sind daher mit dem gleichen Bezugszeichen versehen, ergänzt durch den Buchstaben "a". Die weitere Beschreibung kann sich daher auf die markanten Unterschiede zu der bereits beschriebenen Spannvorrichtung 1 konzentrieren. Die elektronische Steuereinrichtung ist der Übersichtlichkeit halber nicht dargestellt.

Die Spannvorrichtung 1a setzt sich aus zwei Spanneinheiten 44, 45 zusammen, die im Aufbau identisch sind. Jede Spanneinheit beinhaltet unter anderem eine erste und zweite Antriebseinheit 12a, 13a mit einem ersten bzw. zweiten Abtriebsteil 14a, 15a, eine Spannbacke 2a bzw. 3a, ein die jeweilige Spannbacke 2a, 3a mit den beiden Abtriebsteilen 14a, 15a verbindendes Koppelglied 22a und eine Festsetzeinrichtung 33a zum bedarfsgemäßen ortsfesten Festlegen einer Drehlagerstelle 34a des Koppelglieds 22a. Der Aufbau jeder Spanneinheit 44, 45 entspricht unter Berücksichtigung der nachstehenden Ausnahmen dem Aufbau der oben erläuterten Spannvorrichtung 1.

Jede der Spanneinheiten 44, 45 besitzt nur eine mit dem zugeordneten Koppelglied 22a verbundene Spannbacke 2a bzw. 3a. Außerdem fällt die ortsfest fixierbare Drehlagerstelle 34a nicht mit einer der beiden Krafteinleitungsstellen 23a, 24a zusammen, sondern ist mit Abstand zu diesen angeordnet. Genauer gesagt befindet sich die Drehlagerstelle 34a zweckmäßigerweise zwischen einerseits den beiden Krafteinleitungsstellen 23a, 24a und andererseits der mit der zugeordneten Spannbacke 2a, 3a gekoppelten Kraftabgabestelle 25a. Letztere befindet sich in einer zur Abtriebsbewegung 17a quer verlaufenden Richtung diesseits der Drehlagerstelle 34a, während die beiden Krafteinleitungsstellen 23a, 24a jenseits der Drehlagerstelle 34a am Koppelglied 22a angreifen.

Werden bei deaktivierter Festsetzeinrichtung 33a die beiden Antriebseinheiten 12a, 13a einer jeweiligen Spanneinheit 44, 45 aktiviert, verlagert sich das Koppelglied 22a entsprechend der Richtung der jeweiligen Abtriebsbewegung 17a und nimmt dabei die zweckmäßigerweise über einen Kraftübertragungsarm 26a, 27a angekoppelte Spannbacke 2a, 3a mit.

Weiterhin abweichend von der oben erläuterten Spannvorrichtung 1 wirkt eine jeweilige Festsetzeinrichtung 33a nicht auf ein Abtriebsteil einer Antriebseinheit ein, sondern auf ein diesbezüglich gesondertes Mitnehmerelement 46, 47, das an der Drehlagerstelle 34a drehbar und im Übrigen ortsfest bezüglich dem Koppelglied 22a fixiert ist.

Bei deaktivierten Festsetzeinrichtungen 333a werden die Mitnehmerelemente 46, 47 während der in Figur 5 illustrierten Positionierphase vom zugeordneten Koppelglied 22a mitgenommen und ebenfalls verlagert. In der Klemmstellung werden die Mitnehmerelemente 46, 47 in vergleichbarer Weise von der jeweils zugeordneten Festsetzeinrichtung 33a festgehalten, wie dies bei der Spannvorrichtung 1 mit dem dortigen zweiten Abtriebsteil 15 geschieht. Dies ist in Figur 6 illustriert.

Während eines Arbeitszyklus der Spannvorrichtung 1a durchlaufen zunächst beide Spanneinheiten 44, 45 gleichzeitig eine Positionierphase, bis ihre Spannbacke 2a, 3a gemäß Figur 5 am festzuspannenden Werkstück 6a zur Anlage gelangt ist. Aufgrund des synchronen Betriebes der beiden Antriebseinheiten 12a, 13a einer jeweiligen Spanneinheit 44, 45 liegt dabei quasi eine starre Verbindung zwischen den zugeordneten Abtriebsteilen 14a, 15a und dem daran angebrachten Koppelglied 22a vor. Da die beiden Spannbacken 2a, 3a mit je einem eigenen Paar erster und zweiter Antriebseinheiten 12a, 13a kooperieren und kinematisch nicht gekoppelt sind, werden beim Ausführungsbeispiel die Abtriebsteile 14a, 15a der beiden Spanneinheiten 44, 45 bis zum Erreichen der aus Figur 5 ersichtlichen Spann-Ausgangsstellung der Koppelglieder 22a in einander entgegengesetzten Richtungen bewegt, beim Ausführungsbeispiel aufeinander zu.

Nachdem die Koppelglieder 22a die Spann-Ausgangsstellung erreicht haben, werden gemäß Figur 6 die Festsetzeinrichtungen 33a aktiviert und dadurch die Drehlagerstellen 34a ortsfest fixiert. Anschließend werden im Rahmen einer Bewegungsumkehr die Abtriebsteile 14a, 15a gemäß Pfeilen 48 zu einer Abtriebsbewegung 17a angetrieben, die bezüglich der in der Positionierphase stattfindenden Abtriebsbewegung entgegengesetzt gerichtet ist. Dies ist aus Figur 6 gut ersichtlich.

Die dementsprechend beaufschlagten Paare erster und zweiter Abtriebsteile 14a, 15a üben nun eine Stellkraft auf den mit ihnen verbundenen Hebelarm des Koppelgliedes 22a aus, sodass das Köppelglied 22a gemäß Pfeil 43a um die zugeordnete Drehlagerstelle 34a verschwenkt wird. Dementsprechend verschwenkt der die Kraftabgabestelle 25a aufweisende andere Hebelarm gemäß Pfeilen 49 in entgegengesetzter Richtung und beaufschlagt die Spannbacken 2a, 3a bis zum Erreichen der endgültigen Spannstellung.

Da der mit den Abtriebsteilen 14a, 15a zusammenwirkende Hebelarm des Koppelgliedes 22a länger ist als der mit einer Spannbacke 2a, 3a kooperierende Hebelarm, ergibt sich eine erhebliche Kraftübersetzung.

Um ein Verklemmen der sich relativ zueinander bewegenden Komponenten zu vermeiden, ist zweckmäßigerweise vorgesehen, dass an den Krafteinleitungsstellen 23a, 24a und an der Kraftabgabestelle 25a Bewegungsfreiheitsgrade zwischen den miteinander gekoppelten Komponenten quer zur Richtung der Abtriebsbewegung 17 gegeben sind.

Während bei den gezeigten Ausführungsbeispielen jeweils zwei Antriebseinheiten auf das Koppelglied 22 einwirken, sind auch Modifikationen möglich bei denen mehr als zwei Antriebseinheiten pro Koppelglied 22, 22a vorgesehen sind.

Auch die Spannvorrichtung 1a ist in Gestalt einer Greifvorrichtung realisiert. Es ist jedoch ohne weiteres nachvollziehbar, dass man eine Spannvorrichtung auch mit nur einer der beschriebenen Spanneinheiten 44, 45 ausstatten könnte, wenn nur eine zu bewegende Spannbacke benötigt wird.

Während beim Ausführungsbeispiel der Figuren 1 bis 3 die Arbeitsbewegung 5 quer und insbesondere rechtwinkelig zur Abtriebsbewegung 17 verläuft, ist sie beim Ausführungsbeispiel der Figuren 4 bis 6 mit der Abtriebsbewegung 17a gleichgerichtet.

Wie schon erwähnt, liegt beim Ausführungsbeispiel der Figuren 1 bis 3 die Kraftabgabestelle 25 zwischen den beiden Krafteinleitungsstellen 23, 24. Sie könnte jedoch auch so platziert sein, dass die zweite Krafteinleitungsstelle 24 zwischen ihr und der ersten Krafteinleitungsstelle 23 zu liegen kommt.

Beiden Ausführungsbeispielen ist gemeinsam, dass im Betrieb die beiden Antriebseinheiten 12, 13, 12a, 13a zunächst synchron betätigt werden, so dass die zugeordneten Abtriebsteile 14, 15, 14a, 15a gleichzeitig in zueinander paralleler Richtung verlagert werden. Sobald an den Spannbacken 2, 3, 2a, 3a eine höhere Spannkraft erforderlich ist, wird die Festsetzeinrichtung 33, 33a aktiviert und die Drehlagerstelle 34, 34a des Koppelgliedes 22, 22a in seiner aktuellen Position festgesetzt. Anschließend wird die weitere Bewegung des oder der außerhalb der Drehlagerstelle 34, 34a angreifenden Abtriebsteils bzw. Abtriebsteile entsprechend untersetzt zu den Spannbacken 2, 3, 2a, 3a übertragen. Je nach Auslegung des Koppelgetriebes 8, 8a lassen sich auf einem dann eingeschränkten Wegbereich sehr hohe Spannkräfte erzielen. Dieser eingeschränkte Wegbereich, der zwischen der Spann-Ausgangsposition und der endgültigen Spannposition liegt, kann an jeder beliebigen Stelle des gesamten Hubbereiches der Spannbacken 2, 3, 2a, 3a liegen und kann auch jederzeit an eine andere Stelle verlegt werden.

## Patentansprüche

1. Spannvorrichtung, mit mindestens einer Spannbacke (2, 3, 2a, 3a), die zu einer Arbeitsbewegung (5, 5a) antreibbar ist, indem sie über ein Koppelgetriebe (8, 8a) mit den jeweils zu einer Abtriebsbewegung (17, 17a) antreibbaren Abtriebsteilen (14, 15, 14a, 15a) wenigstens zweier Antriebseinheiten (12, 13, 12a, 13a) bewegungsgekoppelt ist, wobei das Koppelgetriebe (8, 8a) ein mit beiden Abtriebsteilen (14, 15, 14a, 15a) in Antriebsverbindung stehendes starres Koppelglied (22, 22a) aufweist, das an einer Kraftabgabestelle (25, 25a) mit der Spannbacke (2, 3, 2a, 3a) antriebsmäßig verbunden ist und das durch Betätigung mindestens einer Antriebseinheit (12, 13, 12a, 13a) bezüglich einer zu der Kraftabgabestelle (25, 25a) beabstandeten Drehlagerstelle (34, 34a) verschwenkbar ist, **dadurch gekennzeichnet, dass** beide Abtriebsteile (14, 15, 14a, 15a) in jeweils schwenkbeweglicher Weise derart an zueinander beabstandeten Krafteinleitungsstellen (23, 24, 23a, 24a) des starren Koppelgliedes (22) angreifen, dass durch Betätigung beider Antriebseinheiten (12, 13, 12a, 13a) eine der Positionierung der mindestens einen Spannbacke (2, 3, 2a, 3a) dienende translatorische Verlagerung des Koppelgliedes (22) einschließlich der Drehlagerstelle (34, 34a) hervorrufbar ist, und dass eine gesteuert betätigbare Festsetzeinrichtung (33, 33a) vorhanden ist, durch die das Koppelglied (22, 22a) an der Drehlagerstelle (34, 34a) unter Belassung seiner Verschwenkbarkeit variabel in unterschiedlichen Positionen ortsfest festsetzbar ist, um bei anschließender Betätigung mindestens einer beabstandet zu der Kraftabgabestelle (25, 25a) und zu der Drehlagerstelle (34, 34a) am Koppelglied (22, 22a) angreifenden Antriebseinheit (12, 13, 12a, 13a) eine Beaufschlagung der mindestens einen Spannbacke (2, 3, 2a, 3a) mit Hebelübersetzung hervorzurufen.

2. Spannvorrichtung nach Anspruch 1, **gekennzeichnet durch** mehrere **durch** die vorhandenen Antriebseinheiten (12, 13, 12a, 13a) gleichzeitig zu Arbeitsbewegungen (5, 5a) antreibbare Spannbacken (2, 3, 2a, 3a).

3. Spannvorrichtung nach Anspruch 2, **dadurch gekennzeichnet, dass** die mehreren Spannbacken (2, 3) mit ein und demselben Koppelglied (22) in Antriebsverbindung stehen.

4. Spannvorrichtung nach Anspruch 2, **dadurch gekennzeichnet, dass** sie mehrere Spanneinheiten (44, 45) mit je mindestens einer über ein Koppelgetriebe (8a) mit wenigstens zwei Antriebseinheiten (12a, 13a) in Antriebsverbindung stehenden Spannbacke (2a, 3a) aufweist, wobei den Koppelgliedern (22a) sämtlicher Koppelgetriebe (8a) jeweils eine Festsetzeinrichtung (33a) zugeordnet ist.

5. Spannvorrichtung nach einem der Ansprüche 1 bis 4, **dadurch gekennzeichnet, dass** es sich bei der Abtriebsbewegung (17, 17a) wenigstens eines und zweckmäßigerweise sämtlicher Abtriebsteile (14, 15, 14a, 15a) um Linearbewegungen handelt, die zweckmäßigerweise parallel zueinander verlaufen.

6. Spannvorrichtung nach einem der Ansprüche 1 bis 5, **dadurch gekennzeichnet, dass** es sich bei mindestens einer und zweckmäßigerweise bei sämtlichen Antriebseinheiten (12, 13, 12a, 13a) um Linearantriebe handelt, die zweckmäßigerweise mit zueinander paralleler Ausrichtung nebeneinander angeordnet sind.

7. Spannvorrichtung nach Anspruch 6, **dadurch gekennzeichnet, dass** es sich bei mindestens einem und zweckmäßigerweise bei sämtlichen Linearantrieben um elektrische Linearantriebe handelt, insbesondere um elektrodynamische Lineardirektantriebe.

8. Spannvorrichtung nach einem der Ansprüche 1 bis 7, **dadurch gekennzeichnet, dass** die Festsetzeinrichtung (33) mit dem Abtriebsteil (15) einer Antriebseinheit (13) zusammenwirkt.

9. Spannvorrichtung nach Anspruch 8, **dadurch gekennzeichnet, dass** das Koppelglied (22) an der Drehlagerstelle (34) drehbar am Abtriebsteil (15) der Antriebseinheit (13) gelagert ist.

10. Spannvorrichtung nach Anspruch 8 oder 9, **dadurch gekennzeichnet, dass** das Abtriebsteil (15) eine am Koppelglied (22) angreifende Abtriebsstange (35) aufweist, mit der die Festsetzeinrichtung (33) zusammenwirkt.

11. Spannvorrichtung nach einem der Ansprüche 1 bis 7, **dadurch gekennzeichnet, dass** die Festsetzeinrichtung (33a) mit einem bezüglich den vorhandenen Abtriebsteilen (14a, 15a) gesonderten Mitnehmerelement (46) zusammenwirkt, das an der Drehlagerstelle. (34a) mit dem Koppelglied (22a) verbunden ist, so dass es bei deaktivierter Festsetzeinrichtung (33a) von dem durch Betätigung der Antriebseinheiten (12a, 13a) verlagerten Koppelglied (22a) relativ zur Festsetzeinrichtung (33a) mitgenommen wird.

12. Spannvorrichtung nach einem der Ansprüche 1 bis 11, **dadurch gekennzeichnet, dass** die Abtriebsbewegung (17) der Abtriebsteile (14, 15) während des Positionierens und des sich daran anschließenden Festspannens der mindestens einen Spannbacke (2, 3, 2a, 3a) gleichgerichtet ist.

13. Spannvorrichtung nach einem der Ansprüche 1 bis 11, **dadurch gekennzeichnet, dass** die Abtriebsbewegung (17a) der Abtriebsteile (14a, 15a) während des Positionierens und des sich daran anschließenden Festspannens der mindestens einen Spannbacke (2, 3, 2a, 3a) in einander entgegengesetzten Richtungen verläuft.

14. spannvorrichtung nach einem der Ansprüche 1 bis 13, **dadurch gekennzeichnet, dass** die Festsetzeinrichtung (33, 33a) elektrisch betätigbar oder fluidisch betätigbar ausgebildet ist.

15. Spannvorrichtung nach einem der Ansprüche 1 bis 14, **dadurch gekennzeichnet, dass** die Festsetzeinrichtung (33, 33a) als Klemmeinrichtung ausgeführt ist.

16. Spannvorrichtung nach einem der Ansprüche 1 bis 15, **dadurch gekennzeichnet, dass** die Festsetzeinrichtung (33, 33a) zur kombiniert kraft- und formschlüssigen Festsetzung der Drehlagerstelle (34, 34a) des Koppelgliedes (22, 22a) ausgebildet ist.

17. Spannvorrichtung nach einem der Ansprüche 1 bis 16, **gekennzeichnet durch** eine Ausgestaltung als Greifvorrichtung mit mehreren alternativ aufeinander zu oder voneinander weg bewegbaren Spannbacken (2, 3, 2a, 3a).

18. Spannvorrichtung nach einem der Ansprüche 1 bis 17, **dadurch gekennzeichnet, dass** die mehreren Antriebseinheiten (12, 13, 12a, 13a) durch eine zugeordnete Steuereinrichtung (18) unabhängig voneinander ansteuerbar sind.

19. Spannvorrichtung nach einem der Ansprüche 1 bis 18, **gekennzeichnet durch** zwei zueinander parallele, als Linearantriebe ausgebildete Antriebseinheiten (12, 13, 12a, 13a), deren Abtriebsteile (14, 15, 14a, 15a) **durch** ein sich quer zur Richtung der möglichen Linearbewegungen erstreckendes Koppelglied (22, 22a) miteinander verbunden sind, das während der Positionierphase **durch** gleichzeitige Betätigung der beiden Antriebseinheiten (12, 13, 12a, 13a) unter Mitnahme der Kraftabgabestelle (25, 25a) translatorisch verlagerbar ist.

20. Spannvorrichtung nach Anspruch 19, **dadurch gekennzeichnet, dass** die am Koppelglied (22) vorgesehene Krafteinleitungsstelle (24) eines der Abtriebsteile (15) mit der Drehlagerstelle (34) zusammenfällt und die Kraftabgabestelle (25) einen geringen Abstand zu der Drehlagerstelle als zur Krafteinleitungsstelle (23) des anderen Abtriebsteils (14) aufweist.

21. Spannvorrichtung nach Anspruch 19 oder 20, **dadurch gekennzeichnet, dass** die Kraftabgabestelle (25) zwischen den beiden Krafteinleitungsstellen (23, 24) der Abtriebsteile (14, 15) platziert ist.

22. Spannvorrichtung nach Anspruch 21, **dadurch gekennzeichnet, dass** die festsetzbare Drehlagerstelle (34a) des Koppelgliedes (22a) zwischen einerseits der Kraftabgabestelle (25a) und andererseits den beiden Krafteinleitungsstellen (23a, 24a) angeordnet ist.

## Claims

1. Clamping device with at least one clamping jaw (2, 3, 2a, 3a) capable of being driven to perform an operating movement (5, 5a) by being coupled for movement to the output parts (14, 15, 14a, 15a) of at least two drive units (12, 13, 12a, 13a), which can be driven to perform an output movement (17, 17a), via a coupler mechanism (8, 8a), wherein the coupler mechanism (8, 8a) comprises a rigid coupler element (22, 22a) drive-connected to both output parts (14, 15, 14a, 15a), which is connected for drive to the clamping jaw (2, 3, 2a, 3a) at a power output point (25, 25a) and which is pivotable relative to a pivot bearing point (34, 34a) located at a distance from the power output point (25, 25a) by the operation of at least one drive unit (12, 13, 12a, 13a), **characterised in that** both of the output parts (14, 15, 14a, 15a) act in a pivotable manner on mutually spaced power input points (23, 24, 23a, 24a) of the rigid coupler element (22) such that the operation of the two drive units (12, 13, 12a, 13a) can cause a translatory displacement of the coupler element (22) including the pivot bearing point (34, 34a) for the positioning of the at least one clamping jaw (2, 3, 2a, 3a), and **in that** a fixing device (33, 33a) capable of controlled operation is provided, whereby the coupler element (22, 22a) can be fixed variably in different positions at the pivot bearing point (34, 34a) while maintaining its pivotability, in order to cause a pressurisation with mechanical advantage of the at least one clamping jaw (2, 3, 2a, 3a) when at least one drive unit (12, 13, 12a, 13a) acting on the coupler element (22, 22a) at a distance from the power output point (25, 25a) and from the pivot bearing point (34, 34a) is subsequently operated.

2. Clamping device according to claim 1, **characterised by** a plurality of clamping jaws (2, 3, 2a, 3a) capable of being driven to perform simultaneous operating movements (5, 5a) by the existing drive units (12, 13, 12a, 13a).

3. Clamping device according to claim 2, **characterised in that** the plurality of clamping jaws (2, 3) are drive-connected to one and the same coupler element (22).

4. Clamping device according to claim 2, **characterised in that** it comprises a plurality of clamping units (44, 45), each including at least one clamping jaw (2a, 3a) drive-connected to at least two drive units (12a, 13a) via a coupler mechanism (8a), wherein a fixing device (33a) is assigned to each of the coupler elements (22a) of all coupler mechanisms (8a).

5. Clamping device according to any of claims 1 to 4, **characterised in that** the output movements (17, 17a) of at least one and expediently of all of the output parts (14, 15, 14a, 15a) are linear movements which are expediently parallel to one another.

6. Clamping device according to any of claims 1 to 5, **characterised in that** at least one and expediently all of the drive units (12, 13, 12a, 13a) are linear drives which are expediently arranged side by side in parallel orientation.

7. Clamping device according to claim 6, **characterised in that** at least one and expediently all of the linear drives are electric linear drives, in particular electrodynamic linear drives.

8. Clamping device according to any of claims 1 to 7, **characterised in that** the fixing device (33) acts together with the output part (15) of a drive unit (13).

9. Clamping device according to claim 8, **characterised in that** the coupler element (22) is rotatably mounted on the output part (15) of the drive unit (13) at the pivot bearing point (34).

10. Clamping device according to claim 8 or 9, **characterised in that** the output part (15) comprises an output rod (35) acting on the coupler element (22), with which the fixing device (33) co-operates.

11. Clamping device according to any of claims 1 to 7, **characterised in that** the fixing device (33a) acts together with a driver element (46) separate from the existing output parts (14a, 14b), which is connected to the coupler element (22a) at the pivot bearing point (34a), so that, when the fixing device (33a) is deactivated, it is carried along relative to the fixing device (33a) by the coupler element (22a) displaced by the operation of the drive units (12a, 13a).

12. Clamping device according to any of claims 1 to 11, **characterised in that** the output movement (17) of the output parts (14, 15) runs in the same direction during the positioning and the subsequent clamping of the at least one clamping jaw (2, 3, 2a, 3a).

13. Clamping device according to any of claims 1 to 11, **characterised in that** the output movement (17a) of the output parts (14a, 15a) runs in opposite directions during the positioning and the subsequent clamping of the at least one clamping jaw (2, 3, 2a, 3a).

14. Clamping device according to any of claims 1 to 13, **characterised in that** the fixing device (33, 33a) is designed for electric or fluidic operation.

15. Clamping device according to any of claims 1 to 14, **characterised in that** the fixing device (33, 33a) is designed as a clamping device.

16. Clamping device according to any of claims 1 to 15, **characterised in that** the fixing device (33, 33a) is designed for the combined non-positive and positive location of the coupler element (22, 22a).

17. Clamping device according to any of claims 1 to 16, **characterised by** being designed as a gripping device with a plurality of clamping jaws (2, 3, 2a, 3a) capable of moving alternatively towards and away from one another.

18. Clamping device according to any of claims 1 to 17, **characterised in that** the drive units (12, 13, 12a, 13a) can be selected independently by an associated control unit (18).

19. Clamping device according to any of claims 1 to 18, **characterised by** two parallel drive units (12, 13, 12a, 13a) designed as linear drives, the output parts (14, 15, 14a, 15a) of which are connected to one another by a coupler element (22, 22a) extending at right angles to the direction of the possible linear movements, which is capable of translatory displacement while carrying along the power output point (25, 25a) by the simultaneous operation of the two drive units (12, 13, 12a, 13a) in the positioning phase.

20. Clamping device according to claim 19, **characterised in that** the power input point (24) of one of the output parts (15), which is provided on the coupler element (22), coincides with the pivot bearing point (34), and **in that** the power output point (25) has a lesser distance from the pivot bearing point than from the power input point (23) of the other output part (14).

21. Clamping device according to claim 19 or 20, **characterised in that** the power output point (25) is placed between the two power input points (23, 24) of the output parts (14, 15).

22. Clamping device according to claim 21, **characterised in that** the fixable pivot bearing point (34a) of the coupler element (22a) is located between the power output point (25a) on one side and the two power input points (23a, 24a) on the other side.

## Revendications

1. Dispositif de serrage, avec au moins une mâchoire de serrage (2, 3, 2a, 3a) qui peut être entraînée pour un mouvement de travail (5, 5a) par le fait qu'elle est couplée en mouvement, par l'intermédiaire d'un mécanisme d'accouplement (8, 8a), aux parties de sortie (14, 15, 14a, 15a) d'au moins deux unités d'entraînement (12, 13, 12a, 13a) pouvant être entraînées chacune en un mouvement de sortie (17, 17a), dans lequel le mécanisme d'accouplement (8, 8a) présente un organe d'accouplement (22, 22a) rigide en liaison de travail avec les deux parties de sortie (14, 15, 14a, 15a), organe qui est relié en entraînement avec la mâchoire de serrage (2, 3, 2a, 3a) au niveau d'un point de transfert de force (25, 25a) et qui, par actionnement d'au moins une unité d'entraînement (12, 13, 12a, 13a), peut pivoter par rapport à un point de soutien rotatif (34, 34a) espacé du point de transfert de force (25, 25a), **caractérisé en ce que** les deux parties de sortie (14, 15, 14a, 15a) s'engagent de manière pivotante sur des points d'introduction de force (23, 24, 23a, 24a) mutuellement espacés de l'organe d'accouplement rigide (22), de telle manière que, par actionnement des deux unités d'entraînement (12, 13, 12a, 13a), un déplacement translatoire de l'organe d'accouplement (22) avec le point de soutien rotatif (34, 34a) servant au positionnement de la mâchoire de serrage (2, 3, 2a, 3a) au nombre d'au moins une peut être effectué, et **en ce qu'**un dispositif d'immobilisation (33, 33a) actionnable de manière contrôlée est présent, par lequel l'organe d'accouplement (22, 22a) peut être immobilisé de façon stationnaire dans différentes positions et de manière variable au niveau du point de soutien rotatif (34, 34a) tout en conservant sa capacité de pivotement afin de provoquer une sollicitation de la mâchoire de serrage (2, 3, 2a, 3a) au nombre d'au moins une avec effet de levier lors d'un actionnement ultérieur d'au moins une unité d'entraînement (12, 13, 12a, 13a) se mettant en prise sur l'organe d'accouplement (22, 22a) à distance du point de transfert de force (25, 25a) et du point de soutien rotatif (34, 34a).

2. Dispositif de serrage selon la revendication 1, **caractérisé par** plusieurs mâchoires de serrage (2, 3, 2a, 3a) pouvant être entraînées simultanément dans des déplacements de travail (5, 5a) par les unités d'entraînement (12, 13, 12a, 13a) présentes.

3. Dispositif de serrage selon la revendication 2, **caractérisé en ce que** les plusieurs mâchoires de serrage (2, 3) sont en liaison d'entraînement avec un seul et même organe d'accouplement (22).

4. Dispositif de serrage selon la revendication 2, **caractérisé en ce qu'**il présente plusieurs unités de serrage (44, 45) chacune avec au moins une mâchoire de serrage (2a, 3a) en liaison d'entraînement avec au moins deux unités d'entraînement (12a, 13a) par l'intermédiaire d'un mécanisme d'accouplement (8a), un dispositif d'immobilisation (33a) étant associé à chaque fois aux organes d'accouplement (22a) de tous les mécanismes d'accouplement (8a).

5. Dispositif de serrage selon l'une des revendications 1 à 4, **caractérisé en ce que** les mouvements de sortie (17, 17a) d'au moins une et, de manière avantageuse, de toutes les parties de sortie (14, 15, 14a, 15a) sont des mouvements linéaires qui sont dirigés de manière avantageuse parallèlement les uns aux autres.

6. Dispositif de serrage selon l'une des revendications 1 à 5, **caractérisé en ce qu'**au moins une et, de manière avantageuse, toutes les unités de sortie (12, 13, 12a, 13a) sont des entraînements linéaires, qui sont de manière avantageuse disposés parallèlement les uns aux autres.

7. Dispositif de serrage selon la revendication 6, **caractérisé en ce qu'**au moins l'un et de manière avantageuse tous les entraînements linéaires sont des entraînements linéaires électriques, en particulier des entraînements directs linéaires électrodynamiques.

8. Dispositif de serrage selon l'une des revendications 1 à 7, **caractérisé en ce que** le dispositif d'immobilisation (33) coopère avec la partie de sortie (15) d'une unité d'entraînement (13).

9. Dispositif de serrage selon la revendication 8, **caractérisé en ce que** l'organe d'accouplement (22) est monté rotatif sur la partie de sortie (15) de l'unité de sortie (13) au niveau du point de soutien rotatif (34).

10. Dispositif de serrage selon la revendication 8 ou 9, **caractérisé en ce que** la partie de sortie (15) présente une tige de sortie (35) en prise avec l'organe d'accouplement (22), avec laquelle le dispositif d'immobilisation coopère (33).

11. Dispositif de serrage selon l'une des revendications 1 à 7, **caractérisé en ce que** le dispositif d'immobilisation (33a) coopère avec un élément d'entraînement (46) séparé des parties de sortie (14a, 15a) présentes, qui est relié à l'organe d'accouplement (22a) au niveau du point de soutien rotatif (34a), de sorte qu'il est entraîné par rapport au dispositif d'immobilisation (33a) par l'organe d'accouplement (22a) déplacé par actionnement des unités d'entraînement (12a, 13a) quand le dispositif d'immobilisation (33a) est désactivé.

12. Dispositif de serrage selon l'une des revendications 1 à 11, **caractérisé en ce que** le mouvement de sortie (17) des parties de sortie (14, 15) est dirigé dans le même sens lors du positionnement et du serrage consécutif de la mâchoire de serrage (2, 3, 2a, 3a) au nombre d'au moins une.

13. Dispositif de serrage selon l'une des revendications 1 à 11, **caractérisé en ce que** le mouvement de sortie (17a) des parties de sortie (14a, 15a) s'étend dans des directions mutuellement opposés lors du positionnement et du serrage consécutif de la mâchoire de serrage (2, 3, 2a, 3a) au nombre d'au moins une.

14. Dispositif de serrage selon l'une des revendications 1 à 13, **caractérisé en ce que** le dispositif d'immobilisation (33, 33a) est réalisé avec commande électrique ou avec commande par fluide.

15. Dispositif de serrage selon l'une des revendications 1 à 14, **caractérisé en ce que** le dispositif d'immobilisation (33, 33a) est réalisé comme un dispositif de blocage.

16. Dispositif de serrage selon l'une des revendications 1 à 15, **caractérisé en ce que** le dispositif d'immobilisation (33, 33a) est réalisé de manière à immobiliser par force et par engagement positif le point de soutien rotatif (34, 34a) de l'organe d'accouplement (22, 22a).

17. Dispositif de serrage selon l'une des revendications 1 à 16, **caractérisé par** une configuration en dispositif de préhension avec plusieurs mâchoires de serrage (2, 3, 2a, 3a) mobiles alternativement en direction l'une vers l'autre ou l'une en s'écartant de l'autre.

18. Dispositif de serrage selon l'une des revendications 1 à 17, **caractérisé en ce que** les plusieurs unités d'entraînement (12, 13, 12a, 13a) peuvent être commandées indépendamment les unes des autres par un dispositif de commande associé (18).

19. Dispositif de serrage selon l'une des revendications 1 à 18, **caractérisé par** deux unités d'entraînement (12, 13, 12a, 13a) mutuellement parallèles et conformées en entraînements linéaires, dont les parties de sortie (14, 15, 14a, 15a) sont reliées entre elles par un organe d'accouplement (22, 22a) s'étendant transversalement à la direction des mouvements linéaires possibles, organe qui peut être déplacé en translation pendant la phase de positionnement par actionnement simultané des deux unités d'entraînement (12, 13, 12a, 13a) en entraînant le point de transfert de force (25, 25a).

20. Dispositif de serrage selon la revendication 19, **caractérisé en ce que** le point d'introduction de force (24) de l'une des parties de sortie (15), prévu sur l'organe d'accouplement (22), coïncide avec le point de soutien rotatif (34) et le point de transfert de force (25) présente une plus faible distance depuis le point de soutien rotatif que depuis le point d'introduction de force (23) de l'autre partie de sortie (14).

21. Dispositif de serrage selon la revendication 19 ou 20, **caractérisé en ce que** le point de transfert de force (25) est placé entre les deux points d'introduction de force (23, 24) des parties de sortie (14, 15).

22. Dispositif de serrage selon la revendication 21, **caractérisé en ce que** le point de soutien rotatif (34a) immobilisable de l'organe d'accouplement (22a) est placé entre d'une part le point de transfert de force (25a) et d'autre part les deux points d'introduction de force (23a, 24a).
